# EUROPÄISCHE PATENTSCHRIFT

(11) **EP 1 664 522 B1**
(45) Veröffentlichungstag und Bekanntmachung des Hinweises auf die Patenterteilung: **24.01.2007**
(21) Anmeldenummer: 04764081.8
(22) Anmeldetag: 13.08.2004
(51) Int. Cl.: F02M 37/22, F02M 69/54, F02M 69/46

(54) **FILTERBAUEINHEIT UND VENTIL FÜR EIN KRAFTSTOFFVERSORGUNGSSYSTEM**
FILTER UNIT AND VALVE FOR A FUEL SUPPLY SYSTEM
MODULE DE FILTRATION ET SOUPAPE POUR SYSTEME D'ALIMENTATION EN CARBURANT

(30) Priorität: 18.09.2003 DE 20314463 U
(43) Veröffentlichungstag der Anmeldung: 07.06.2006
(73) Patentinhaber: A. Kayser Automotive Systems GmbH, 37574 Einbeck (DE)
(72) Erfinder: KRAMER, Dirk, 37073 Göttingen (DE); FAY, Ronald, 31073 Delligsen (DE); KIPP, Bernd, 37176 Nörten-Hardenberg (DE)
(74) Vertreter: Sobisch, Peter
(86) Internationale Anmeldenummer: PCT/EP2004/009084
(87) Internationale Veröffentlichungsnummer: WO 2005/035969

(56) Entgegenhaltungen:
- EP-A- 0 779 948
- DE-A- 3 115 908
- DE-A- 4 017 425
- DE-A- 19 526 142
- DE-A- 19 737 600
- DE-A- 19 753 611

## Beschreibung

Die Erfindung bezieht sich auf eine Filterbaueinheit entsprechend dem Oberbegriff des Anspruchs 1. Sie bezieht sich ferner auf zur Verwendung auch in Verbindung mit einer solchen Filterbaueinheit bestimmte Ventile entsprechend dem Oberbegriff des Anspruchs 4.

Die den Tank einer Verbrennungskraftmaschine mit deren Einspritzventilen verbindende Kraftstoffleitung ist regelmäßig mit einer Filterbaueinheit ausgerüstet, die druckseitig bezüglich einer Kraftstoffpumpe angeordnet ist. Der Kraftstoff muss den Einspritzventilen nach Maßgabe des Betriebszustands des Motors unter einem Druck zugeführt werden, der über die Kraftstoffpumpe aufgebracht wird, wobei unter anderem dafür Sorge zu tragen ist, dass dieser Druck eine Obergrenze nicht überschreitet.

Es ist bekannt, zur Einstellung dieses Druckes Druckregler vorzusehen, und zwar als Einzelkomponenten und auch in einer in eine Filterbaueinheit integrierten Form. Letztgenannte Filterbaueinheiten sind beispielsweise bekannt aus den Druckschriften DE 100 19 784 A1, DE 197 38 805 A1, DE 100 11 262 A1.

Gemeinsam ist diesen bekannten Bauelementen ein zylindrisches, ein radial von außen nach innen durchströmtes Ringfilterelement enthaltendes Gehäuse, dessen Deckel zur Aufnahme eines Druckreglers eingerichtet ist. Zulauf und Ablauf für den Kraftstoff sind fluchtend zueinander und sich parallel zu der Achse des Gehäuses erstreckend angeordnet. Der Druckregler steht mit einer sich koaxial zu dem Gehäuse erstreckenden Rücklaufleitung in Verbindung und ist durch eine federbelastete Membran gekennzeichnet, die nach Maßgabe des herrschenden Druckes des Kraftstoffs im Austrittsbereich aus der Filterbaueinheit auslenkbar, unter Mitwirkung eines Sperrkörpers zur Freigabe der Rücklaufleitung und dementsprechend zur Einstellung eines Ausgangsdruckes der Filterbaueinheit eingerichtet ist.

Eine im Wesentlichen ähnliche, mit einem Druckregler ausgerüstete Filterbaueinheit ist aus der Druckschrift DE 197 11 531 C2 bekannt.

Aus der DE 197 53 611 A1 ist eine vergleichbare Filterbaueinheit bekannt, die im Bereich ihres Deckels mit einem Druckregler ausgerüstet ist. Dieser befindet sich in einem Rohrabschnitt, der in einen Rohrstutzen übergeht, der zur Verbindung mit einer Rückführleitung bestimmt ist. Das Ventil besteht aus einem innerhalb des Gehäuses im Wesentlichen fest angeordneten kugelförmigen Sperrkörper, der mit einem, durch ein Federelement belasteten, durch einen Ventilkolben getragenen ringartigen Ventilsitz zusammenwirkt. Der Ventilkolben wird druckseitig durch den herrschenden Flüssigkeitsdruck beaufschlagt, so dass über das eingesetzte Federelement der Öffnungsdruck konstruktiv festgelegt ist. Der Deckel bildet mit dem Druckregler eine selbständige, vormontierbare Einheit.

Schließlich zeigt die DE 195 26 142 A1 eine weitere Filterbaueinheit, die baulich im Bereich ihres Deckels, somit ausgangsseitig mit einem Druckregler und eingangsseitig, somit bodenseitig mit einem Überdruckventil zusammengefasst ist. Sowohl das Überdruckventil als auch der Druckregler sind mit in den Tank einer Verbrennungskraftmaschine führenden Rücklaufleitungen ausgerüstet. Über den als Druckreduzierventil angelegten Druckregler wird der Ausgangsdruck dem Arbeitsdruck von Einspritzventilen angepasst, während das eingangsseitige Überdruckventil dazu dient, die durch die Filterbaueinheit insgesamt geführte Kraftstoffmenge mit Hinblick auf eine Verbesserung deren Nutzungsdauer zu begrenzen.

Die Verwendung von Druckreglern zur Regelung bzw. Begrenzung des Arbeitsdruckes des Kraftstoffs in einer Kraftstoffleitung ermöglicht die Einstellung dieses Druckes nach Maßgabe relativ enger Toleranzfelder, wobei deren bauliche Zusammenfassung mit einer Filterbaueinheit zahlreiche Vorteile bei der Herstellung, der Instandhaltung, der Lagerhaltung usw. bietet. Druckregler sind jedoch regelmäßig relativ teure Präzisionsbauteile, deren Funktionsbereich über denjenigen einer bloßen Druckbegrenzung hinausgeht.

Ein Wesensmerkmal von Druckreglern, Druckbegrenzungsventilen und dergleichen besteht in einem federbelasteten, mit der Berandung einer Durchflussöffnung zusammenwirkenden Sperrkörper, der regelmäßig ebenso wie die einen Sitz bildende Berandung aus einem metallischen Werkstoff besteht. Wachsende Komfortanforderungen an den Betrieb eines Personenkraftwagens führen unter anderem jedoch zu der Forderung nach Verminderungen der mit dessen Betrieb verbundenen Geräuschentwicklung. Viele der genannten Druckregler, Druckbegrenzungsventile usw. können diese Anforderung jedoch nur sehr unvollkommen erfüllen, ein Umstand, der in Abhängigkeit von der Art des Fahrzeug sowie des Motorkonzepts mit zunehmenden Schaltfrequenzen, kürzeren Steuerzeiten usw. ständig an Bedeutung gewinnt.

Eine wesentliche Voraussetzung für einen problemfreien und insbesondere raschen Startvorgang einer mit einem System von Einspritzventilen ausgerüsteten Verbrennungskraftmaschine besteht bekanntlich darin, dass unmittelbar zu Beginn des Startvorgangs im Bereich der Einspritzventile der Kraftstoff unter einem definierten Systemdruck steht. Dieser Druck ist alleine über die Kraftstoffpumpe aufzubringen und es ist deren elektrische Steuerung bei Kraftfahrzeugen regelmäßig dahingehend angelegt, dass diese bereits in der Stellung "Zündung ein" des Zündschlüssels eingeschaltet wird und der Druckaufbau beginnt. Dieser Zustand ist jedoch regelmäßig befristet, so dass dann, wenn anschließend kein Anlassvorgang ausgelöst wird, die Pumpe wieder abgeschaltet wird und ein anfänglich aufgebauter Druck abfällt. Ein anschließend ausgelöster Startvorgang ist mit dem Problem belastet, dass zunächst kein ausreichender Druck im Bereich der Einspritzventile zur Verfügung steht.

Ventile mit einem verbesserten Dämpfungsverhalten, die für eine Verwendung in Kraftstoffleitungen bestimmt sind, sind an sich bekannt. So zeigt die DE 40 17 425 ein Ventil, welches zur Verwendung als Druckhalteventil für das Kraftstoffversorgungssystem einer Verbrennungskraftmaschine bestimmt ist. Dieses besteht aus einem zur Durchströmen bestimmten Rohrkörper, der in einem mittleren Bereich eine einen Ventilsitz bildende Durchströmungsöffnung aufweist, welche den Innenraum des Rohrelements in eine Druckseite und eine Entspannungsseite unterteilt. Der Ventilsitz wirkt mit einem federbelasteten Sperrkörper zusammen, an dessen, dem Ventilsitz abgekehrter Seite ein zylindrischer Endabschnitt angeformt ist, der in einem Dämpfungszylinder geführt ist. Der Dämpfungszylinder ist unter Zwischenanordnung von Stegen innerhalb des Rohrkörpers festgelegt und weist eine, zur Druckseite hin orientierte, zur Ausübung einer Drosselfunktion bestimmte Öffnung auf. Öffnungs- und Schließbewegungen des Sperrkörpers erfolgen somit unter Verdrängung von Flüssigkeit aus dem Dämpfungszylinder heraus bzw. unter Einsaugen von Flüssigkeit in diesen hinein.

Ein weiteres vergleichbares, mit einer Kraftstoffpumpe in Verbindung stehendes Druckhalteventil ist aus der DE 31 15 908 A1 bekannt. Dieses zeigt einen Sperrkörper, der unter Federvorspannung an der Durchströmungsöffnung eines Ventilsitzes anliegt, wobei der Sperrkörper entspannungsseitig als Hohlkörper ausgebildet ist, innerhalb welchem ein Federelement aufgenommen ist. Die dem Ventilsitz abgekehrten Enden des Sperrkörpers sind in einem als Ringzylinder ausgebildeten Dämpfungszylinder aufgenommen und in diesem unter einem Spiel geführt, so dass eine Drossel- und damit eine Dämpfungsfunktion eingerichtet ist.

Es ist ferner bekannt, die elektrische Steuerung der Kraftstoffpumpe bereits mit dem Betätigen einer Zentralverriegelung des Fahrzeugs zu aktivieren, so dass bereits zu diesem Zeitpunkt der Druckaufbau durch die Kraftstoffpumpe eingeleitet wird. Nachdem dieser Zustand wiederum zeitlich befristet angelegt ist, ergeben sich nach Ablauf dieser Frist, die durch ein Abschalten der Pumpe gekennzeichnet ist, wiederum vergleichbare anfängliche Startprobleme.

Es ist vor diesem Hintergrund die Aufgabe der Erfindung, eine Filterbaueinheit der eingangs bezeichneten Art dahingehend auszugestalten, dass diese bei kostengünstiger Herstellbarkeit sämtlichen Anforderungspararnetern einer Kraftstoffversorgungsleitung sowie des Betriebs einer Verbrennungskraftmaschine in dem erforderlichen Ausmaß und unter Vermeidung der dem eingangs dargelegten Stand der Technik anhaftenden Nachteile genügt. Gelöst ist diese Aufgabe bei einer solchen Filterbaueinheit durch die Merkmale des Kennzeichnungsteils des Anspruchs 1.

Erfindungswesentlich ist hiernach, dass als Einrichtung zur Steuerung des Druckes lediglich ein Druckbegrenzungsventil verwendet werden kann, somit ein im Vergleich zu einem Druckregler entsprechend dem vorstehend dargelegten Stand der Technik einfacher konzipiertes Bauteil. Es ist festgestellt worden, dass die einem Druckbegrenzungsventil üblichen eigenen Toleranzbereiche für die Anforderungen eines Kraftstoffversorgungssystems an sich völlig ausreichend sind. Die erfindungsgemäße Filterbaueinheit kann somit im einfachsten Fall aus der Zusammenfassung eines Druckbegrenzungsventils und eines Filterelements bestehen, das mit eingangs- und ausgangsseitigen Rohrstutzen sowie einem als Rücklauf konzipierten weiteren Rohrstutzen ausgerüstet ist. Es bildet eine preiswert herstellbare, allen Anforderungen gerecht werdende Komponente eines Kraftstoffversorgungssystems.

Der Deckel des Gehäuses ist mit einem Rohrabschnitt ausgerüstet, der als Aufnahme des Ventils eingerichtet ist. Das Ventil kann im einfachsten Fall aus einem eine Durchströmungsöffnung aufweisenden, in den Rohrabschnitt beispielsweise einschraubbaren Ventilsitz und einem federbelasteten Sperrkörper bestehen, der die Durchströmungsöffnung bis zum Erreichen des Öffnungsdruckes verschließt. Der Ventilsitz befindet sich in der Querwandung eines Rohrkörpers, der in den genannten Rohrabschnitt einschraubbar sein kann.

Um eine wenigstens teilweise Unterdrückung der mit Öffnungs- und Schließvorgängen verbundenen Geräuschentwicklungen zu erreichen, ist das Ventil mit einem Dämpfungszylinder versehen, der ein Flüssigkeitsvolumen beinhaltet, das nach Maßgabe der Bewegung des Sperrkörpers unter Mitwirkung einer Drosselstelle aus einem Raum verdrängbar bzw. in diesen Raum einführbar ist. Zu diesem Zweck ist ein Endabschnitt des Sperrkörpers in dem Dämpfungszylinder geführt und definiert zusammen mit diesem den genannten Raum. Im einfachsten Fall ist der Raum ein Zylinder, dessen eine Stirnseite und Mantelfläche durch den Dämpfungszylinder und dessen andere Stirnseite durch den genannten Endabschnitt bzw. Strukturelemente desselben gebildet sind. In jedem Fall erfolgt somit die Bewegung des Sperrkörpers gedämpft.

Durch Änderung der Position des Dämpfungszylinders innerhalb des genannten Rohrkörpers sind die Vorspannung des Federelements und damit der Öffnungsdruck variierbar. Dies kann erreicht werden, wenn der durch die Muffe unter Zwischenanordnung radial orientierter Stege gehaltene Dämpfungszylinder über ein an der Muffe angeformtes Außengewinde mit einem Innengewinde des Rohrkörpers im Eingriff steht.

Das im Rahmen der erfindungsgemäßen Filterbaueinheit eingesetzte Ventil kann als Druckbegrenzungsventil konzipiert sein, so dass durch dessen Öffnungsdruck bei gegebener Pumpenfördercharakteristik der Maximaldruck des Kraftstoffs in den zu den Einspritzventilen führenden Leitungen festgelegt ist.

Es besteht jedoch auch die Möglichkeit, das in der erfindungsgemäßen Filterbaueinheit eingesetzte Ventil als Druckhalteventil zu konzipieren. Dies bedeutet, dass das Ventil auf einen solchen Öffnungsdruck hin eingestellt ist, der auch bei Abschaltung der Förderpumpe zumindest vorübergehend in den zu den Einspritzventilen führenden Leitungen aufrechterhalten werden kann. Ein Startvorgang, der während der Zeitspanne einer Aufrechterhaltung des Druckes ausgelöst wird, wird somit dadurch erleichtert, dass im Bereich der Einspritzventile zu einem frühestmöglichen Zeitpunkt ein ausreichender Systemdruck des Kraftstoffs zur Verfügung gestellt ist. Startprobleme, die sich ansonsten dadurch ergeben können, dass dieser Druck mit Beginn des Startvorgangs erst aufgebaut werden muss, werden somit ebenso vermieden wie eine Ausgasung des Kraftstoffs.

Die Druckbegrenzungsfunktion und auch die Druckhaltefunktion können durch ein Ventil realisiert werden, das mit der in den Tank führenden Rückführleitung in Wirkverbindung steht.

Das erfindungsgemäße, durch eine gedämpfte Bewegung des Sperrkörpers gekennzeichnete Ventil ist somit vorteilhaft als Baueinheit eines Filterbauelements einsetzbar, und zwar sowohl als Druckbegrenzungs- als auch als Druckhalteventil.

Eine weitere Aufgabe der vorliegenden Erfindung besteht darin, ein auch allgemein verwendbares, kostengünstig herstellbares Ventil entsprechend dem Oberbegriff des Anspruchs 4 zu entwerfen, welches auch zur Verwendung in einer Filterbaueinheit und zum Einsetzen in einen im Öffnungsfall des Ventils zum Durchströmen bestimmten Rohrabschnitt konzipiert ist und welches auch bei hohen Schaltfrequenzen einen geräuscharmen Betrieb ermöglicht. Gelöst ist diese Aufgabe bei einem solchen Ventil durch die Merkmale des Kennzeichnungsteils des Anspruchs 4.

Ein solches Ventil besteht im Wesentlichen aus einem, sämtliche Komponenten tragenden Rohrkörper, der in den genannten Rohrabschnitt einschraubbar ist. Diese Komponenten bestehen aus einem Sperrkörper, einer in den Rohrkörper einschraubbaren, einen Dämpfungszylinder unter Belassung eines Zwischenraumes umgebenden Muffe und einem funktionell zwischen dem Dämpfungszylinder und dem Sperrkörper angeordneten Federelement. Der Rohrkörper weist eine Querwand auf, in welche der Ventilsitz eingeformt ist. Es bildet somit ein Bauteil, das in unterschiedlichsten technischen Funktionszusammenhängen einsetzbar ist.

Die Ausbildung der Drosselstelle als Ringspalt zwischen dem Endabschnitt des Sperrkörpers und dem Dämpfungszylinder wird als besonders vorteilhaft angesehen.

Besonders vorteilhaft ist es, wenn an dem Sperrkörper und zwar auf dessen dem Ventilsitz zugekehrten Seite ein aus einem Elastomerwerkstoff bestehender Dichtkörper angeformt ist. Neben einer hiermit verbundenen weiter verbesserten Geräuschdämpfung wird auch eine sehr gute Dichtungswirkung erzielt. Der Dichtkörper ist geometrisch an die Gestalt und den Querschnitt des Ventilsitzes angepasst und kann alternativ auch aus einem Kunststoff bestehen, der hinsichtlich seines Dichtungsverhaltens in Verbindung mit dem Werkstoff des Ventilsitzes vergleichbare Eigenschaften wie ein Elastomerwerkstoff aufweist.

Entsprechend den Merkmalen des Anspruchs 5 ist der Rohrkörper des Ventils aus Kunststoff, der Sperrkörper hingegen aus Metall, z.B. Messing ausgebildet. Diese werkstoffliche Ausgestaltung hat sich als besonders vorteilhaft erwiesen.

Ein Ventil der vorstehend beschriebenen Art kann zur Druckbegrenzung allgemein eines Mediums eingesetzt werden, wo immer die insbesondere mit raschen Schaltvorgängen verbundene Geräuschentwicklung begrenzt werden muss. Hinzu tritt eine Verwendungsmöglichkeit als Druckhalteventil. Die Verwendungsmöglichkeiten eines solchen Ventils sind somit nicht auf die eingangs erwähnten Filterbaueinheiten beschränkt.

Die Erfindung wird im Folgenden unter Bezugnahme auf die in den Zeichnungen schematisch wiedergegebenen Ausführungsbeispiele näher erläutert werden. Es zeigen:
Fig. 1 eine Filterbaueinheit im Axialschnitt;
Fig. 2 ein Ausführungsbeispiel eines erfindungsgemäßen Druckbegrenzungsventils als Teildarstellung II der Fig. 1 im Axialschnitt;
Fig. 3 eine vergrößerte Teildarstellung einer Einzelheit III des Druckbegrenzungsventils gemäß Fig. 2;
Fig. 4 ein vereinfachtes Schaltschema eines erfindungsgemäßen Druckhalteventils;
Fig. 5 ein Ausführungsbeispiel eines erfindungsgemäßen Druckhalteventils gemäß Fig. 4 im Axialschnitt.

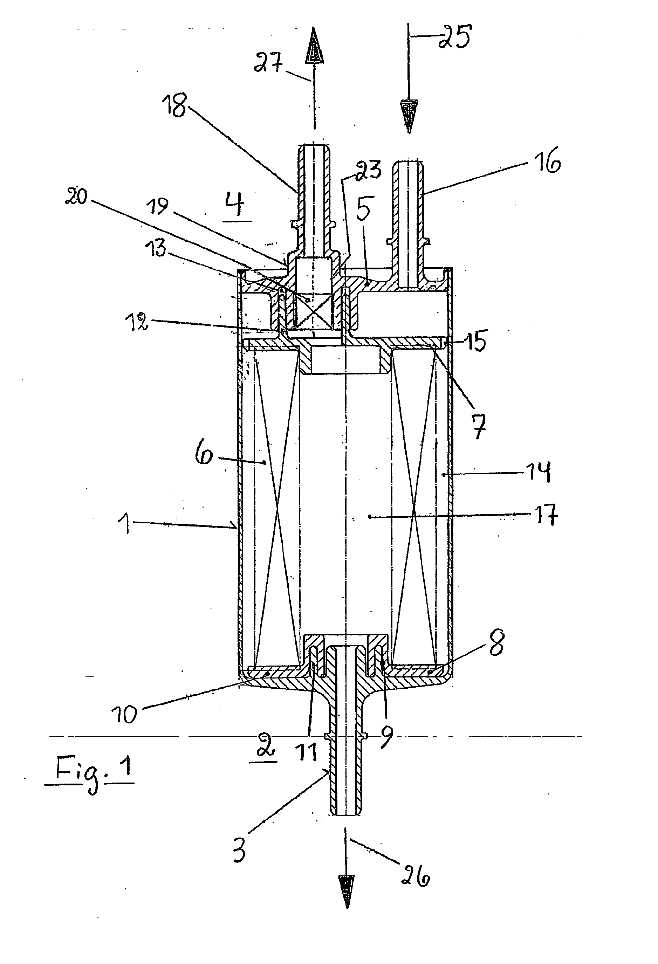

Mit 1 ist in Fig. 1 das zylindrische Gehäuse einer Filterbaueinheit bezeichnet, welches an seinem unteren Ende 2 einstückig mit einem, sich koaxial zu diesem erstreckenden Rohrstutzen 3 ausgebildet ist. Das obere Ende 4 des Gehäuses 1 ist durch einen mit dessen Berandung fest verbundenen, beispielsweise verschweißten Deckel 5 verschlossen, welcher im Folgenden noch näher zu beschreiben sein wird.

In dem Gehäuse 1 ist ein ringzylindrisches, an sich bekanntes Filterelement 6 aufgenommen, das sich koaxial zu dem Gehäuse erstreckt und oberseitig sowie unterseitig durch Abschlusskappen 7, 8 begrenzt wird, mit denen es in fester Verbindung steht. In die Struktur der unteren Abschlusskappe 8 ist eine Ringnut 9 eingeformt, in welche ein sich ebenfalls koaxial zu dem Gehäuse 1 erstreckender, an dessen Boden 10 angeformter Ringsteg 11 eingesteckt ist. Es ist ferner ein an der oberen Abschlusskappe 7 angeformter, bezüglich des Gehäuses 1 außermittig angeordneter Ringsteg 12 in eine an dem Deckel 5 angeformte, dem Innenraum des Gehäuses 1 zugekehrte Ringnut 13 eingesteckt, so das aus dem Zusammenwirken der Ringnuten 9, 13 sowie der Ringstege 11, 12 eine Fixierung des Filterelements 6 innerhalb des Gehäuses 1 gegeben ist.

Mit 14 ist ein zwischen der Außenseite des Filterelementes 6 und der Innenseite des Mantels des Gehäuses 1 gebildeter Ringraum bezeichnet, der über einen Ringspalt 15 zwischen der Außenseite der Abschlusskappe 7 und der Innenseite des genannten Mantels mit einem Rohrstutzen 16 in durchgängiger Verbindung steht. Der Rohrstutzen 16 ist einstückig mit dem Deckel 5 ausgebildet und erstreckt sich außermittig parallel zu der Achse des Gehäuses 1.

Mit 17 ist ein zylindrischer Raum innerhalb des Filterelementes 6 bezeichnet, der an seinem unteren Ende mit dem Rohrstutzen 3 in durchgängiger Verbindung steht.

Außermittig bezüglich des Gehäuses 1, sich parallel zu dessen Achse erstreckend ist an dem Deckel 5 ein weiterer Rohrstutzen 18 angeformt. Dieser ist an seinem, dem Innenraum des Gehäuses 1 zugekehrten Ende durch einen radial erweiterten Rohrabschnitt 19 gekennzeichnet, der zur Aufnahme eines im Folgenden noch zu beschreibenden Druckbegrenzungsventils 20 eingerichtet ist.

Zum Einbau der vorstehend beschriebenen Filterbaueinheit in eine Kraftstoffleitung werden der Rohrstutzen 16 druckseitig mit einer Kraftstoffpumpe und der Rohrstutzen 18 mit einer Rücklaufleitung zu dem Tank der Verbrennungskraftmaschine verbunden, so dass der Rohrstutzen 3 den Ausgang der Filterbaueinheit bildet. Kraftstoff tritt somit in die Baueinheit in Richtung des Pfeiles 25 ein, gelangt über den Ringspalt 15, den Ringraum 14, das Filterelement 6 und den Raum 17 zu dem Rohrstutzen 3, den es in Richtung des Pfeiles 26 verlässt. Dies gilt dann, wenn das Druckbegrenzungsventil 20 geschlossen ist, weil der innerhalb des Raumes 17 herrschende Druck unterhalb des Öffnungsdruckes des Druckbegrenzungsventils 20 liegt. Übersteigt dieser Druck einen einstellbaren Ansprechdruck, öffnet das Druckbegrenzungsventil 20 und es strömt Kraftstoff in Richtung des Pfeiles 27 zurück zu dem Tank.

Unter Bezugnahme auf die Zeichnungsfiguren 2 und 3 wird im Folgenden ein erfindungsgemäßes Ausführungsbeispiel eines zum Einsetzen in eine solche Filterbaueinheit bestimmtes Druckbegrenzungsventil beschrieben werden.

Das Druckbegrenzungsventil 20 besteht aus einem Sperrkörper 30, der an seinem einen, hier unteren Ende eine kegelstumpfartige, sich zu einer Unterseite 31 hin verjüngende Ausgestaltung aufweist, die zum Zusammenwirken mit einer sich koaxial zu der Achse des Deckels 5' erstreckenden Durchströmungsöffnung 32 bestimmt ist, die in eine Querwandung 33 eines von der Unterseite 31 her in den Rohrabschnitt 19 eingesetzten, beispielsweise eingeschraubten oder in sonstiger Weise fixierten Rohrkörpers 34 eingeformt ist. Die Querwandung 33 sowie die Berandung des Durchströmungsquerschnitts 32 bilden somit jeweils einen Ventilsitz 32' bzw. eine Sitzfläche 32" für den Sperrkörper 30.

Der Deckel 5' entspricht von seiner Zweckbestimmung her dem Deckel 5 der Filterbaueinheit gemäß Fig. 1 und unterscheidet sich von letzterem lediglich darin, dass der Rohrstutzen 18 nunmehr zentrisch angeordnet ist.

Mit 35 ist ein Dämpfungszylinder bezeichnet, innerhalb welchem der, der Durchströmungsöffnung 32 abgekehrte Endabschnitt 36 des Sperrkörpers 30 geführt ist. Der Dämpfungszylinder 35 erstreckt sich koaxial zu dem Rohrabschnitt 19 und dem Endabschnitt 36, wobei letzterer an seinem, dem Dämpfungszylinder 35 zugekehrten Ende durch einen, sich ebenfalls koaxial zu dem Rohrabschnitt erstreckenden, zu der Seite des Dämpfungszylinders 35 hin offenen Raum 37 gekennzeichnet ist. Zwischen den relativ zueinander gleitfähigen Zylinderflächen des Endabschnitts 36 und des Dämpfungszylinders 35 ist ein zeichnerisch nicht dargestellter Ringspalt bzw. ein sonstiger, als Drosselstelle wirkender Durchströmungsquerschnitt vorgesehen, über welchen bei einer Bewegung des Endabschnitts 36 in den Dämpfungszylinder 35 hinein, die in dem Raum 37 sowie dem übrigen Raum 38 befindliche Flüssigkeit verdrängt und in den Raum 39 außerhalb des Dämpfungszylinders übertreten kann.

Ein Verdrängen von Flüssigkeit zwischen den Räumen 37, 38 einerseits und 39 andererseits bzw. eine Relativbewegung des Endabschnitts 36 innerhalb des Dämpfungszylinders 35 erfolgt nach Maßgabe der Bemessung des genannten Ringspaltes oder des sonstigen Durchstömungsquerschnitts in jedem Fall unter Drosselung.

Der Dämpfungszylinder weist auf seiner, dem Sperrkörper 30 zugekehrten Seite eine Ringstufe 40 auf, an welcher das eine Ende einer zeichnerisch angedeuteten Feder 35' abgestützt ist, deren anderes Ende an einer zugekehrten Ringfläche 41 des Sperrkörpers 30 anliegt. Der Dämpfungszylinder 35 ist seinerseits über radiale, zeichnerisch nicht dargestellte Stege 35" an der Innenseite einer Muffe 42 gehalten, die außenseitig mit einem Innengewinde des Rohrkörpers 34 im Eingriff steht und von der dem Innenraum des Gehäuses der Filterbaueinheit abgekehrten Seite her in den Rohrkörper 34 einschraubbar ist, so dass über die Einschraublänge der Muffe 42 innerhalb des Rohrkörpers 34 der Abstand der Ringstufe 40 von der Ringfläche 41 und damit die auf den Sperrkörper 30 ausgeübte, en Öffnungsdruck definierende Federkraft der Feder 35' einstellbar ist.

Die vorstehend anhand der Zeichnungsfiguren 1 bis 3 beschriebene Filterbaueinheit kann im Verlauf eines Kraftstoffversorgungssystems eingesetzt werden. Sie zeichnet sich durch eine äußerst geringe Geräuschentwicklung aus, da die Bewegung des Sperrkörpers 30 aufgrund der besonderen Ausbildung des Druckbegrenzungsventils 20 gedämpft erfolgt.

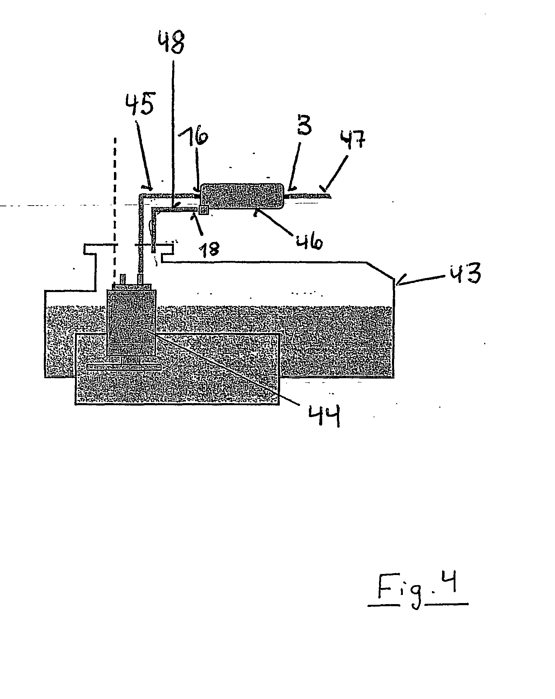

In dem Schaltschema gemäß Fig. 4 ist mit 43 ein Kraftstofftank bezeichnet, in dessen Struktur eine elektrische Kraftstoffpumpe 44 eingebunden ist, deren Druckleitung 45 an den Rohrstutzen 16 einer Filterbaueinheit 46 angeschlossen ist. Der Rohrstutzen 3 der Filterbaueinheit 46 steht über eine Ausgangsleitung 47 mit zeichnerisch nicht dargestellten Einspritzventilen einer Verbrennungskraftmaschine in Verbindung.

Schließlich ist mit 48 eine Rücklaufleitung bezeichnet, über welche eine Verbindung zwischen dem Rohrstutzen 18 der Filterbaueinheit 46 und dem Kraftstofftank 43 hergestellt ist.

Regelmäßig kommt eine Kraftstoffpumpe 44 zum Einsatz, die mit konstanter Drehzahl betrieben wird und über welche in der Druckleitung 45 ein konstanter Druck zur Verfügung gestellt ist. In Abhängigkeit von dem Betriebszustand der Verbrennungskraftmaschine wird von einem somit konstanten Fördervolumenstrom der Pumpe ein variabler Teilvolumenstrom über die Rücklaufleitung 48 in den Kraftstofftank 43 zurückgeführt, so dass in der Ausgangsleitung 47 im Bereich der Einspritzventile der jeweils erforderliche Druck bereitgestellt wird. Ein Abschalten der Kraftstoffpumpe ist regelmäßig mit einem hiermit einhergehenden Druckabfall in der Ausgangsleitung 47 verbunden. Je nachdem, wie vollständig dieser Druckabfall erfolgt, kann es bei einem anschließenden Startvorgang zu Verzögerungen kommen,falls unmittelbar mit Beginn des Startvorgangs an den Einspritzventilen noch kein ausreichender Systemdruck ansteht und dieser über die Kraftstoffpumpe 44 vielmehr erst aufgebaut werden muss.

Die Filterbaueinheit 46 ist dementsprechend mit einem im Folgenden beispielhaft unter Bezugnahme auf die Zeichnungsfigur 5 noch zu beschreibenden Ventil 49 ausgerüstet, dessen Zweckbestimmung darin besteht, in der Ausgangsleitung 47 einen definierten Systemdruck auch bei Abschaltung der Kraftstoffpumpe 44 zumindest vorübergehend aufrechtzuerhalten, so dass bei einem Startvorgang im Bereich der Einspritzventile in kürzerer Zeit ein ausreichender Druck zur Verfügung gestellt werden kann.

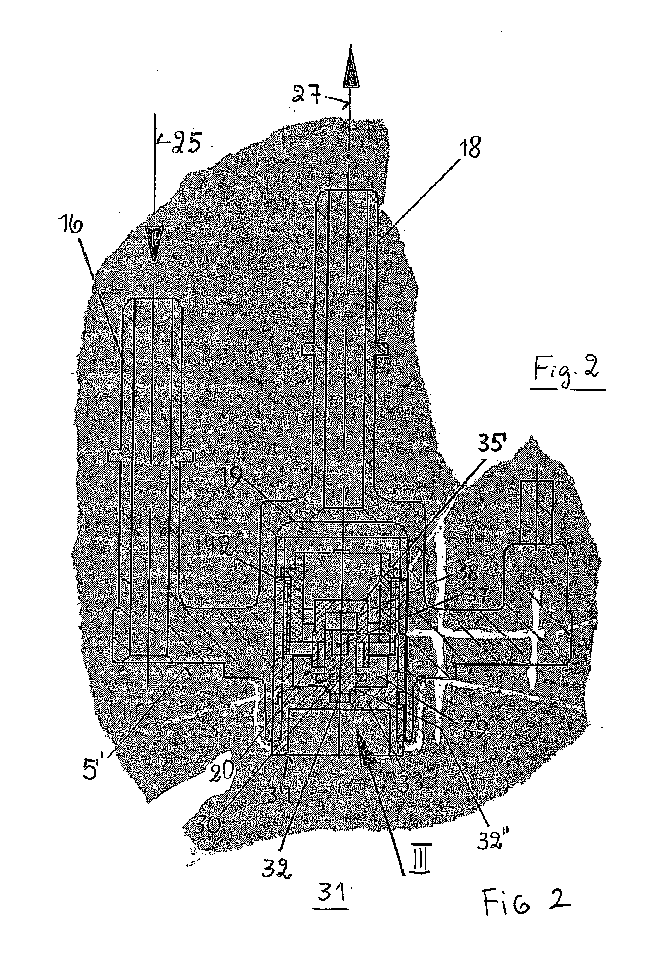

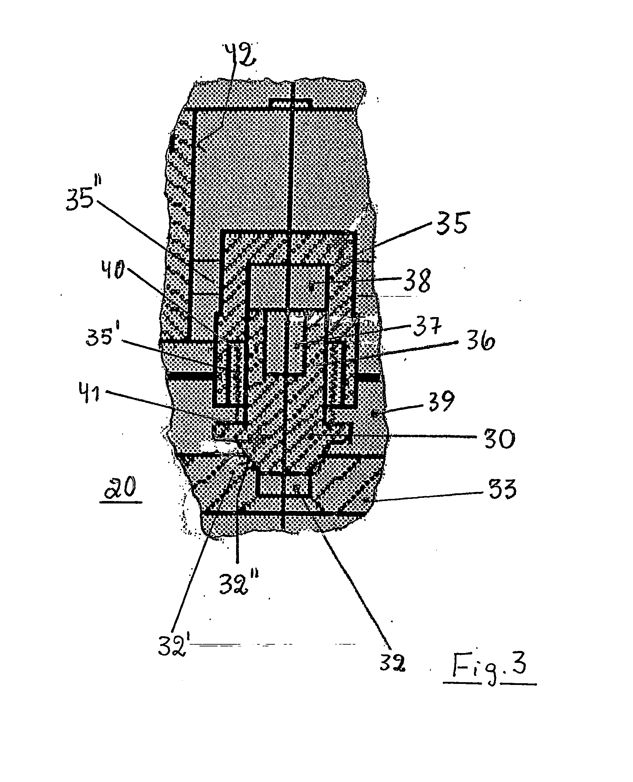

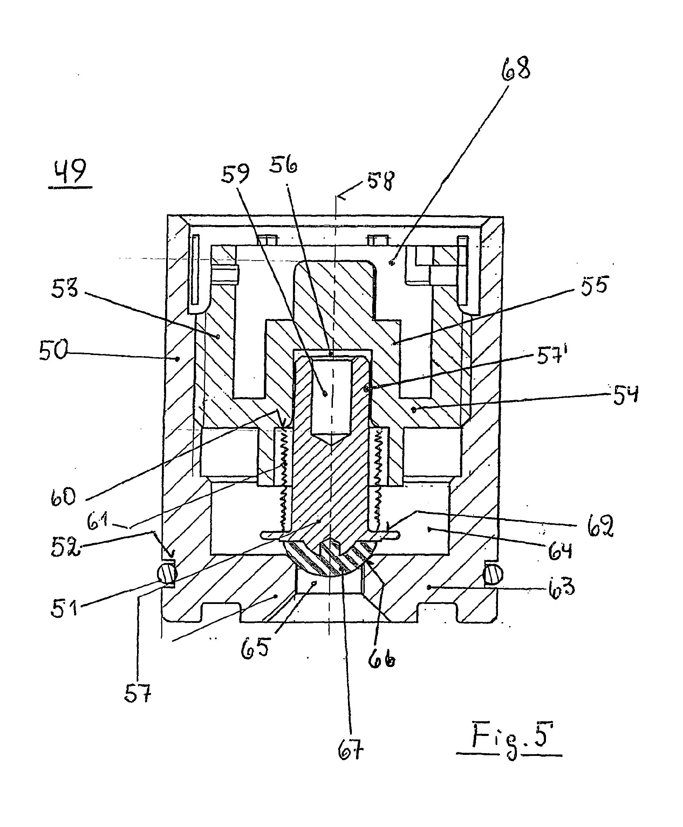

Ein solches Druckhalteventil kann im Prinzip einen Aufbau aufweisen der demjenigen gemäß den Fig. 2, 3 entspricht. Im einzelnen ist in Fig. 5 mit 50 ein Rohrkörper bezeichnet, der in gleicher Weise wie der Rohrkörper 34 zum Einsetzen in einen Rohrabschnitt 19 eines Deckels 5, 5' eingerichtet ist. Der Rohrkörper 50 ist an seinem in der Zeichnungsfigur unterseitigen Ende mit einer zur Aufnahme eines Dichtungsringes 51 bestimmten Ringnut 52 versehen, über welche ein dichtender Einsatz in dem genannten Rohrabschnitt 19 sichergestellt ist.

Mit 53 ist eine Muffe bezeichnet, die von dem oberseitigen Ende her in den Rohrkörper 50 eingesetzt, insbesondere eingeschraubt ist und die über mehrere, sich innenseitig bezüglich dieser radial erstreckende Stege 54 mit einem Dämpfungszylinder 55 in Verbindung steht, der sich koaxial zu dem Rohrkörper 50 erstreckt. Der zur Oberseite hin geschlossene Dämpfungszylinder 55 umschließt einen Raum 56, in welchem der Endabschnitt 57' eines Sperrkörpers 57 in Richtung der Achse 58 des Rohrkörpers 50 gleitfähig aufgenommen ist. Der Endabschnitt 57' weist auf seiner dem Dämpfungszylinder 55 zugekehrte Seite einen Raum 59 auf. Es entspricht der Sperrkörper 37 von seiner Struktur her im Wesentlichen dem Sperrkörper 30.

Der Dämpfungszylinder 55 bildet an seinem unterseitigen Ende eine Ringstufe 60, an welcher das eine Ende einer Feder 61 abgestützt ist, deren anderes Ende an einer Ringfläche 62 des Sperrkörpers 57 anliegt.

Der Dämpfungszylinder 55 umgibt den Endabschnitt 57' des Sperrkörpers 57 mit einem geringfügigen Spiel, so dass ein Flüssigkeitsaustausch zwischen den Räumen 56, 59 einerseits und einem unterseitig durch eine Querwandung des Rohrkörpers 50 begrenzten Raum 64 andererseits möglich ist.

Die Querwandung 63 ist mit einer zentralen Durchgangsbohrung 65 versehen, die sich in Richtung auf den Raum 64 hin erweitert und einen im Querschnitt konischen Ventilsitz 66 bildet.

Das dem Ventilsitz 66 zugekehrte Ende des Sperrkörpers 57 ist durch einen aus einem Elastomerwerkstoff bestehenden Dichtungskörper 67 gekennzeichnet, der mit dem Sperrkörper 57 in fester Verbindung steht und geometrisch an die Gestalt des Ventilsitzes 66 angepasst ist.

Der Rohrkörper 50 sowie die Muffe 53 können aus Kunststoff bestehen, wohingegen der Sperrkörper 57 aus einem Metall, z.B. Messing besteht. Aufgrund der Werkstoffpaarung des Dichtkörpers 67 und des Ventilsitzes 66 ist eine besonders zuverlässige Dichtungswirkung im Schließzustand des Ventils gegeben.

Fig. 5 zeigt das Ventil 49 in der Schließstellung des Sperrkörpers 57. Diese ist durch ein Anliegen des Dichtungskörpers 67 an dem Ventilsitz 66 gekennzeichnet sowie durch eine von der Charakteristik der Feder 61 abhängige Vorspannung. Man erkennt,. dass über die Einschraubtiefe der Muffe 53 in dem Rohrkörper 50 die Vorspannung der Feder 61 einstellbar ist. Diese bestimmt somit den Flüssigkeitsdruck, der zu einer Öffnung des Ventils führt.

Für eine Funktion als Druckhalteventil ist das Ventil 49 leitungsmäßig derart angeordnet, dass der Raum 68 oberhalb des Dämpfungszylinders 55 unmittelbar mit der Rücklaufleitung 48 in Verbindung steht, so dass der Sperrkörper 57 über die Durchgangsbohrung 65 mit dem Systemdruck der Ausgangsleitung 47 beaufschlagt ist. Die Federvorspannung der Feder 61 und damit der Druckwert, der zu einem Schließen dieses Ventils führt, ist nunmehr mit der Maßgabe angelegt, dass dieser Schließdruck einem definierten Druck der Ausgangsleitung 47 entspricht, der auch im Fall eines Abschaltens der Kraftstoffpumpe 44 aufrechterhalten wird. Dies bedeutet, dass im Fall eines Startens des Motors der Druckaufbau vor den Einspritzventilen auf diesem "Restdruck" aufbaut und somit in sehr kurzer Zeit entwickelt werden kann.

## Patentansprüche

1. Filterbaueinheit für ein Kraftstoffversorgungssystem einer Verbrennungskraftmaschine bestehend aus einem durch einen Deckel (5,5') abgeschlossenen Gehäuse (1), mit jeweils eingangs- und ausgangsseitigen, zur Führung des Kraftstoffs bestimmten Rohrstutzen (16,3) und mit einer zur Steuerung des ausgangsseitigen Druckes des Kraftstoffes bestimmten, einen zur Rückführung von Kraftstoff in einen Tank (43) des Kraftstoffversorgungssystems bestimmten Rohrstutzen (18) aufweisenden Einrichtung, welche ein auf einen definierten Öffnungsdruck eingestelltes, die Rückführung öffnendes oder schließendes Ventil (20,49) ist, wobei das Ventil (20,49) in einem Rohrabschnitt (19) angeordnet ist, der ausgangsseitig mit dem Rohrstutzen (18) in durchgängiger Verbindung steht,
wobei das Ventil (20,49) aus einem unter Federkraft an der ringförmigen Durchströmungsöffnung (32,65) des Ventilsitzes (32',66) anliegenden, auf einer Seite durch den Kraftstoff entgegen einer Federkraft beaufschlagten Sperrkörper (30,57) besteht, und
wobei das Ventil (20,49) mit einer Dämpfungseinrichtung ausgerüstet ist, die zur Dämpfung von Bewegungen des Sperrkörpers (30,57) in Richtung auf die Durchströmungsöffnung (32,65) hin bzw. von dieser fort bestimmt und eingerichtet ist,
**dadurch gekennzeichnet,**
**dass** in den Rohrabschnitt (19) ein Rohrkörper (34,50) eingesetzt ist, der in einer Querwandung (33,63) einen Ventilsitz (33',66) mit einer Durchströmungsöffnung (33,65) bildet, wobei die eine Seite der Querwandung dem Innenraum des Gehäuses (1) zugekehrt ist und wobei in den Rohrkörper (34,50) von der dem Innenraum des Gehäuses (1) abgekehrten Seite her eine Muffe (42,53) eingesetzt ist,
**dass** die Dämpfungseinrichtung durch einen durch die Muffe (42,53) gehaltenen Dämpfungszylinder (35,55) und den in diesem geführten Endabschnitt (36,57') des Sperrkörpers (30,57) gebildet ist, wobei ein innerhalb des durch den Dämpfungszylinder (35,55) und den Endabschnitt (36,57') umgrenzten Raumes (37,38;56,59) aufgenommenes Flüssigkeitsvolumen nach Maßgabe der Bewegung des Endabschnitts (36,57') unter Mitwirkung einer definierten Drosselstelle aus diesem Raum (37,38;56,59) verdrängbar bzw. in diesen einführbar ist.

2. Filterbaueinheit nach Anspruch 1, **gekennzeichnet durch** ein an dem Dämpfungszylinder (35,55) einerseits und an dem Sperrkörper (30,57) anderseits abgestütztes, **durch** seine mechanische Vorspannung den Öffnungsdruck des Ventils (20,49) definierendes, auf der der Durchströmungsöffnung (32,65) abgekehrten Seite des Sperrkörpers (30,57) diesen beaufschlagendes Federelement.

3. Filterbaueinheit nach Anspruch 1 oder 2, **dadurch gekennzeichnet, dass** die Position des Dämpfungszylinders (35,55) innerhalb des Rohrabschnitts (19) relativ zu der Durchströmungsöffnung (32.65) einstellbar ausgebildet ist.

4. Ventil (20,49) insbesondere zur Verwendung bei einer Filterbaueinheit entsprechend einem der vorangegangenen Ansprüche 1 bis 3 mit einem Rohrkörper (34,50), der zum Einsetzen in einen zum Durchströmen bestimmten Rohrabschnitt bestimmt ist, der eine einen Ventilsitz (32',66) und einen Durchströmungsquerschnitt (32,65) bildenden, den Innenraum des Rohrkörpers (34,50) in eine Druckseite und eine Entspannungsseite unterteilende Querwandung (33,63) aufweist, einen Sperrkörper (30,57), der unter Federvorspannung an dem entspannungsseitig angeordneten Ventilsitz (32',66) anliegt und dessen dem Ventilsitz (32',66) abgekehrter Endabschnitt (36,57') in einem Dämpfungszylinder (35,55) aufgenommen und geführt ist, wobei der durch den Dämpfungszylinder (35,55) sowie den Endabschnitt (36,57') umgrenzte, flüssigkeitsgefüllte Raum (37,38;56,69) über eine in den bezüglich der Querwandung (33,63) entspannungsseitigen Raum (39,64) einmündende Drosselstelle mit dem übrigen Innenraum des Rohrkörpers (34,50) in durchgängiger Verbindung steht, wobei ein Federelement einerseits an einer Ringstufe (40,60) des Dämpfungszylinders (35,55) und andererseits an einer Ringfläche (41,62) des Sperrkörpers (30,57) abgestützt ist, **dadurch gekennzeichnet, dass** der Dämpfungszylinder (35,55) mit einer Muffe (42,53) in Verbindung steht, die in den Rohrkörper (34,50) von dessen Entspannungsseite her einschraubbar ist, dass die Drosselstelle durch einen Ringspalt zwischen der Außenseite des Endabschnitts (36,57') und der diesem zugekehrten Innenseite des Dämpfungszylinders (35,55) gebildet ist und dass der Sperrkörper (30,57) auf seiner dem Ventilsitz (66) zugekehrten Seite mit einem aus einem Elastomerwerkstoff bestehenden Dichtungskörper (67) in fester Verbindung steht, der zum Zusammenwirken mit dem Ventilsitz (66) bestimmt und eingerichtet ist.

5. Ventil (20,49) nach Anspruch 4, **dadurch gekennzeichnet, dass** der Rohrkörper (34,50) aus Kunststoff und dass der Dämpfungszylinder (35,55) aus einem Metall besteht.

## Claims

1. Filter unit for a fuel supply system of an internal combustion engine consisting of a housing (1) which is closed by a cover (5, 5'), having respective inlet-side and outlet-side pipe connecting pieces (16, 3) intended to channel the fuel, and having a device which is intended to control the outlet-side pressure of the fuel and comprises a pipe connecting piece (18) which is intended to return fuel into a tank (43) of the fuel supply system, and which device is a valve (20, 49) which is adjusted to a defined opening pressure and opens or closes the return passage, wherein the valve (20, 49) is disposed in a pipe portion (19) which is in through-going communication on the outlet side with the pipe connecting piece (18),
wherein the valve (20, 49) consists of a blocking body (30, 57) which, under a resilient force, lies against the annular through-flow orifice (32, 65) of the valve seat (32', 66) and is influenced on one side by the fuel against a resilient force, and
wherein the valve (20, 49) is fitted with a damping device which is intended and arranged to damp movements of the blocking body (30, 57) in the direction of the said through-flow orifice (32, 65) or away therefrom,
**characterised in that**
a pipe body (34, 50) is inserted into the pipe portion (19) and, in a transverse wall (33, 63), forms a valve seat (33', 66') with a through-flow orifice (33, 65), wherein one side of the transverse wall faces the inner chamber of the housing (1) and wherein a sleeve (42, 53) is inserted into the pipe body (34, 50) from the side facing away from the inner chamber of the housing (1),
the damping device is formed by a damping cylinder (35, 55) which is held by the sleeve (42, 53) and by the end portion (36, 57') of the blocking body (30, 57), which is guided in this damping cylinder, wherein a liquid volume which is received within the chamber (37, 38; 56, 59) bounded by the damping cylinder (35, 55) and the end portion (36, 57') can be displaced out of this chamber (37, 38; 56, 59) or introduced into this chamber (37, 38; 56, 59) depending on the movement of the end portion (36, 57') and under the effect of a defined throttle.

2. Filter unit as claimed in claim 1, **characterized by** a spring element which is supported on the one hand on the damping cylinder (35, 55) and on the other hand on the blocking body (30, 57), which by means of its mechanical pretensioning defines the opening pressure of the valve (20, 49) and which, on the side of the blocking body (30, 57) facing away from the through-flow orifice (32, 65), influences this blocking body.

3. Filter unit as claimed in claim 1 or 2, **characterized in that** the position of the damping cylinder (35, 55) within the pipe portion (19) is arranged so as to be adjustable relative to the through-flow orifice (32, 65).

4. Valve (20, 49), in particular for use in a filter unit according to one of the preceding claims 1 to 3 having a pipe body (34, 50) which is intended for insertion into a pipe portion which is intended to have a flow passing through it and which comprises a transverse wall (33, 63) forming a valve seat (32', 66) and a through-flow cross-section (32, 65) and dividing the inner chamber of the pipe body (34, 50) into a pressure side and a relief side, a blocking body (30, 57) which, under resilient pretensioning, lies against the relief side valve seat (32', 66) and of which the end portion (36, 57') facing away from the valve seat (32', 66) is received and guided in a damping cylinder (35, 55), wherein the liquid-filled chamber (37, 38; 56, 69) bounded by the damping cylinder (35, 55) and the end portion (36, 57') is in through-going communication with the remaining inner chamber of the pipe body (34, 50) via a throttle which issues into the chamber (39, 64) which is on the relief side with respect to the transverse wall (33, 63), wherein a spring element is supported on the one hand on an annular step (40, 60) of the damping cylinder (35, 55) and on the other hand on an annular surface (41, 62) of the blocking body (30, 57), **characterized in that** the damping cylinder (35, 55) is connected to a sleeve (42, 53) which can be screwed into the pipe body (34, 50) from the relief side thereof, that the throttle is formed by an annular gap between the outside of the end portion (36, 57') and the inner side, facing this end portion, of the damping cylinder (35, 55), and that on its side facing the valve seat (66) the blocking body (30, 57) is fixedly connected to a sealing body (67) which consists of an elastomeric material and is intended and arranged to cooperate with the valve seat (66).
5. Valve (20, 49) as claimed in claim 4, **characterized in that** the pipe body (34, 50) consists of synthetic material and that the damping cylinder (35, 55) consists of a metal.

## Revendications

1. Unité de filtre pour un système d'alimentation en carburant d'un moteur à combustion interne, composée d'un boîtier (1) fermé par un couvercle (5, 5') avec des tubulures (16, 3) du côté de l'entrée et de la sortie destinées à acheminer le carburant et avec un dispositif destiné à contrôler la pression de sortie du carburant et comprenant une tubulure (18) destinée à ramener le carburant dans un réservoir (43) du système d'alimentation en carburant, qui est une soupape (20, 49) réglée à une pression d'ouverture définie et ouvrant ou fermant la conduite de retour, la soupape (20, 49) étant disposée dans un tronçon de tuyau (19) qui communique de façon ouverte du côté de la sortie avec la tubulure (18),
dans laquelle la soupape (20, 49) se compose d'un élément d'arrêt (30, 57) reposant sous l'action d'un ressort sur l'ouverture d'écoulement annulaire (32, 65) du siège de soupape (32', 66) et exposé d'un côté à l'action du carburant contre l'action d'un ressort, et
dans laquelle la soupape (20, 49) est équipée d'un dispositif d'amortissement qui est conçu pour amortir les mouvements de l'élément d'arrêt (30, 57) se rapprochant et s'écartant de l'ouverture de passage (32, 65),
**caractérisée en ce qu'**un élément tubulaire (34, 50) est inséré dans le tronçon de tuyau (19) et forme un siège de soupape (33', 66) dans une paroi transversale (33, 63) avec une ouverture de passage (33, 65), un côté de la paroi transversale étant orienté vers l'intérieur du boîtier (1), et un manchon (42, 53) étant introduit dans l'élément tubulaire (34, 50) par le côté opposé à l'intérieur du boîtier (1), et
**en ce que** le dispositif d'amortissement est formé par un cylindre d'amortissement (35, 55) retenu par le manchon (42, 53) et par la partie d'extrémité (36, 57') de l'élément d'arrêt (30, 57) guidée dans celui-ci, un volume de liquide logé dans l'espace (37, 38 ; 56, 59) délimité par le cylindre d'amortissement (35, 55) et la partie d'extrémité (36, 57') pouvant être chassé de cet espace (37, 38 ; 56, 59) ou admis dans celui-ci en fonction du déplacement de la partie d'extrémité (36, 57') avec intervention d'un point d'étranglement défini.

2. Unité de filtre selon la revendication 1, **caractérisé en ce qu'**elle comporte un élément de ressort s'appuyant d'une part sur le cylindre d'amortissement (35, 55) et d'autre part sur l'élément d'arrêt (30, 57), définissant par sa précontrainte mécanique la pression d'ouverture de la soupape (20, 49) et agissant sur celle-ci du côté de l'élément d'arrêt (30, 57) opposé à l'ouverture de passage (32, 65).

3. Unité de filtre selon la revendication 1 ou 2, **caractérisée en ce que** la position du cylindre d'amortissement (35, 55) à l'intérieur du tronçon de tuyau (19) par rapport à l'ouverture de passage (32, 65) est réglable.

4. Soupape (20, 49), en particulier destinée à être utilisée dans une unité de filtre selon l'une des revendications 1 à 3 précédentes, avec un élément tubulaire (34, 50) destiné à être introduit dans une section tubulaire servant à un écoulement, qui possède une paroi transversale (33, 63) formant un siège de soupape (32', 66) et une section d'écoulement (32, 65) et divisant l'intérieur de l'élément tubulaire (34, 50) en un côté sous pression et un côté de détente, un élément d'arrêt (30, 57) reposant sous la précontrainte d'un ressort sur le siège de soupape (32', 66) disposé du côté de détente et dont l'extrémité (36, 57') opposée au siège de soupape (32', 66) est logée et guidée dans un cylindre d'amortissement (35, 55), dans laquelle l'espace rempli de liquide (37, 38 ; 56, 59) délimité par le cylindre d'amortissement (35, 55) et la partie d'extrémité (36, 57') communique de façon ouverte, par un point d'étranglement débouchant dans l'espace (39, 64) situé du côté de la détente par rapport à la paroi transversale (33, 63), avec le reste de l'intérieur de l'élément tubulaire (34, 50), un élément de ressort s'appuyant d'une part sur un gradin annulaire (40, 60) du cylindre d'amortissement (35, 55) et d'autre part sur une surface annulaire (41, 62) de l'élément d'arrêt (30, 57), **caractérisée en ce que** le cylindre d'amortissement (35, 55) est relié à un manchon (42, 53) qui peut être vissé dans l'élément tubulaire (34, 50) par le côté de détente de celui-ci, **en ce que** le point d'étranglement est formé par un espace annulaire entre l'extérieur de la partie d'extrémité (36, 57') et le côté intérieur du cylindre d'amortissement (35, 55) orienté vers celle-ci et **en ce que** l'élément d'arrêt (30, 57) est assemblé de façon fixe, sur son côté orienté vers le siège de soupape (66), avec un élément d'étanchéité (67) composé d'un matériau élastomère, qui est destiné à coopérer avec le siège de soupape (66).

5. Soupape (20, 49) selon la revendication 4, **caractérisée en ce que** l'élément tubulaire (34, 50) est fait de plastique et le cylindre d'amortissement (35, 55) d'un métal.
